# EUROPEAN PATENT SPECIFICATION

(11) **EP 3 931 259 B1**
(45) Date of publication and mention of the grant of the patent: **21.02.2024**
(21) Application number: 19806067.5
(22) Date of filing: 25.09.2019
(51) Int. Cl.: C08L 67/04, F21V 35/00, C11C 5/00

(54) **CONTAINER FOR CANDLE PRODUCT**
BEHÄLTER FÜR KERZENWARE
RÉCIPIENT POUR PRODUIT EN FORME DE BOUGIE

(30) Priority: 17.01.2019 PL 42861019
(43) Date of publication of application: 05.01.2022
(73) Proprietor: Mueller Fabryka Swiec S.A., 86-302 Grudziadz (PL)
(72) Inventor: SZCZEPANIAK, Zygmunt, 85-703 Bydgoszcz (PL); PUZIO, Magdalena, 86-300 Grudziadz (PL)
(74) Representative: Czabajski, Jacek
(86) International application number: PCT/PL2019/000083
(87) International publication number: WO 2020/149750

(56) References cited:
- US-A1- 2013 158 175
- US-A1- 2016 201 899
- US-B2- 8 563 635

## Description

The subject of the invention is a container for candle product, intended to be filled with a flammable material, such as paraffin or stearic acid, as well as plant and animal fats.

Because of the structure, candles are divided into standing candles, made of flammable material with adequate rigidity, which do not require additional support of their side walls in order to be placed, and candles in which the flammable material is placed inside a container for various reasons. The container protects the candle material against flowing once the top part of the candle is heated by the burning wick, but it may also provide protection when the candle burns down to the bottom, where the burning wick is still present.

Processes occurring during candle burning are complex. Firstly, the flammable material melts under the influence of heat of the burning wick. At the same time, melted material rises through the wick as a result of wick soaking and level rising inside the wick caused by capillary effects present in the fibrous structure of the wick. The flammable material then burns near the wick, decomposing into gaseous products or evaporating. Gases or vapours burn near the wick, generating light and heat. The wick can burn only if it is too long and burns down only to the level, to which it is saturated with the liquid flammable material. The candle product should be understood in this patent disclosure as all utility and decorative candles, as well as grave candles and tea lights.

The invention is related to a container for a candle product, intended to be filled with liquid material. In the case of most known solutions, the flammable material of the candle is placed inside the container. According to a solution known from the patent solution disclosed in EP 2955436, the subject of the invention is a grave candle. The candle is placed inside a plastic cover, and the cover is provided with a dome-shaped cap with through openings. The container according to this known solution has a cylindrical side wall of the cover and a top, convex cover wall. The dope is placed on the plastic cover. The top edge of the plastic cover is located around the top opening and is inclined towards the inside of the opening. The cylindrical part of the cap fits the cylindrical part of the cover provided as a plastic container.

Another patent document EP 3129707 discloses tea lights containing a flammable substance in containers made of a heat conducting material, such as metal or metal alloys formed into a cylindrical shape, with height smaller than the diameter of the cylinder. The container in such candle products intended for heating liquid food products and drinks is a small container for flammable mass intended to combust, emitting heat, with the flame being extinguished at the end of the process. Such tea light containers are made of plastic and have various shapes in known solutions.

A range of solutions include a tea light bottom or a candle bottom containing flammable material, formed into various shapes. The document of the international patent application WO 2010/064941 discloses a known design of the container of this type of candle products. According to this known solution, the base contains an extruded groove around the base. The base also has a central depression with three grooves running towards the circumference of the container. The grooves have triangular cross-sections. Said radial grooves result in a flow of the flammable candle mass from the circumferential part of the base to said central depression comprising the wick location.

Another known solution is disclosed in the international patent application WO 01/39407. According to this known solution, the tea light is provided with tilted, conical side walls and depressions formed towards the outer wall of the container, providing legs of the container, and with an embossed, circumferential groove.

Another solution is disclosed in the US 7247017 patent disclosure. This disclosure presents a design of a tea light container intended to increase the combustion efficiency of the candle mass. According to this known solution, the container is provided with a profiled, convex pad with perforations corresponding to the form of the central depression in the bottom of the container. A narrow aperture allowing the flow of the melted, flammable mass supplying the wick is provided between the pad surface and the depression.

A range of other candle container designs are known from patent documents No. US 2016/201899 A1, US 2013/158175 A1 and US 8563635 B2, with flammable material cast around the candle wick placed inside the container. The tea light container is usually made of plastic, but glass and ceramics are also used.

The solution according to the invention is related to a plastic candle container. Such containers usually have bottoms comprising the base and cylindrical side walls or side walls with different cross-sections, and are usually made of polypropylene PP, polyethylene PET or polyethylene PET with added polycarbonate PC, or made of polycarbonate PC alone. Production of known containers is usually achieved via extrusion in multi-well moulds, for example in the temperature of approximately 200°C.

The problem to be solved included development of candle containers with improved flame resistance, with improved mechanical properties and preferred properties related to biodegradation after consumption of the flammable material inside the container.

The container for a candle product according to the invention is intended to be filled with a flammable material, through which a wick is passing. The container is provided with a bottom and with side walls and is made of plastic.

The plastic is made of a polymer containing 40% to 99.99 wt.% of polylactide PLA and 0.01% to 60 wt.% of ammonium polyphosphate APP.

Polylactide PLA is a mixture of poly-L-lactide PLLA and poly-D-lactide PDLA isomers, wherein the mixture contains at least 80 wt.% of PLLA and not more than 20 wt.% of PDLA.

According to the invention, the isomer mixture of PLA in the form of poly-L-lactide PLLA and poly-D-lactide PDLA is characterised by the fact that it contains 4 wt.% to 7 wt.% of poly-D-lactide PDLA.

In a preferred embodiment of the invention, the plastic may contain 85 wt.% of polylactide PLA and 15 wt.% of ammonium polyphosphate APP.

Ammonium polyphosphate APP is preferably microencapsulated, wherein microcapsules have a diameter of 25µm to 55µm.

The microcapsules may preferably contain a melanin coating.

In another preferred embodiment of the invention, the container may include 98.4 wt.% of polylactide PLA and 1.6 wt.% of ammonium polyphosphate APP, microencapsulated inside a melamin coating.

The solution according to the invention proposes a container made of plastic, comprising a combination of polylactide with ammonium polyphosphate microencapsulated with melamin. The polylactide PLA is a biodegradable material, while ammonium polyphosphate APP, preferably microencapsulated with melamin, is an agent improving fire resistance of the container. A combination of these materials also resulted in improved mechanical properties.

Samples of material according to the invention were also prepared for tests. The plastic according to the invention, dried for 24 hours at 60 °C, in the form of polylactide PLA containing poly-L-lactide and poly-D-lactide in the weight ratio of 20 : 1, was mixed with ammonium polyphosphate APP microencapsulated inside a melamin coating. The obtained mixture was used to extrude longitudinal profiles with ca. 1mm thick walls, corresponding to the average wall thickness of the candle material container according to the invention. This was followed by a flammability test of this profile according to the ASTM F2417-16 standard, describing the tests of fire safety of candles, in particular of candle containers. Samples in the form of said profiles were placed such that the flame could contact the profile edge in every case. The test used a gas burner supplied with a propane-butane gas mixture. The first flame exposure in this test lasted 10 seconds, with T1 combustion time of the profile comprising the test sample was measured in the case of ignition - wherein the sample combustion time could not exceed 30 seconds. Test results are summarised in Table 1.

**Table 1**

| Sample number | Weight % composition of the sample | APP particle size - value D₉₇[µm] | T1 [s] | T2 [s] |
|---|---|---|---|---|
| 1. | 100% PLA | - | >30 | - |
| 2. | 95% PLA + 5%APP | <30 | 0 | 0 |
| 3. | 90% PLA + 10%APP | <30 | 0 | 0 |
| 4. | 85% PLA + 15%APP | <30 | 0 | 0 |
| 5. | 80% PLA + 20%APP | <30 | 0 | 0 |
| 6. | 95% PLA + 5%APP | <50 | 4 | 2 |
| 7. | 90% PLA + 10%APP | <50 | 2 | 1 |
| 8. | 85% PLA + 15%APP | <50 | 2 | 3 |
| 9. | 80% PLA + 20%APP | <50 | 1 | 2 |
| 10. | 95% PLA + 5%APP | <63 | 0 | 2 |
| 11. | 90% PLA + 10%APP | <63 | 0 | 1 |
| 12. | 85% PLA + 15%APP | <63 | 0 | 0 |
| 13. | 80% PLA + 20%APP | <63 | 0 | 0 |

Combustion time should be understood as time, after which the sample extinguishes. If the sample did not ignite within 10 seconds of flame exposure or if the sample combustion time until extinguishing was shorter than 30 seconds, the tested sample was again exposed to the burner flame for 10 seconds, 5 seconds after the first exposure or after the sample extinguished and combustion T2 was measured for the sample until extinguishing, wherein this time also could not exceed 30 seconds. The sample was placed within the same location during both measurements.

Test results summarised in Table 1 indicate preferable characteristics of containers for a candle product made of plastic with the suggested composition and with a wick reaching the bottom of the container, thus posing a potential fire hazard once the candle burns out. It was also found that the suggested plastic made of the material with the composition according to the invention combines with the flammable material of the candle and forms a monolith with it. A sample made of PLA without added APP was tested in item 1 as a reference sample. It was noted that the extinguishing time T1 exceeded 30 seconds. Tests on other samples containing APP gave significantly better extinguishing time results counted from the ignition time, mostly indicating no specific ignition point.

In addition to production of containers for a candle product, such as containers for candles, tea lights, cups filled with flammable mass or all other container types filled with candle mass for decorative purposes and for candle bases, the suggested material may be used in production of shaped elements used in candle production technologies, such as discs and pressed elements protecting the bottom of the candle and preventing the flame from penetrating below the bottom of the candle, to materials or items the candle is placed on. They may also be used as an element terminating the candle wick combustion process.

The subject of the invention is presented below as embodiments. The examples differ in terms of their qualitative and quantitative composition of materials used to form the container using extrusion. The examples presented below do not limit the shape of the container. The container is intended to be filled with flammable material with a wick passing through the material, and comprises a complete candle product in this condition.

The embodiments presented below present a container for a candle product. The container is provided with a bottom and with side walls and is made of plastic.

### Example I

The container for candle product according to the invention is intended to be filled with a flammable material, through which a wick is passing. The plastic in this embodiment is a polymer containing 98.4 wt.% of polylactide PLA and 1.6 wt.% of ammonium polyphosphate APP. In this embodiment, the polylactide PLA is a mixture of poly-L-lactide PLLA and poly-D-lactide PDLA isomers, wherein the mixture contains at least 80 wt.% of PLLA and not more than 20 wt.% of PDLA. On the other hand, ammonium polyphosphate APP in this embodiment has the form of microcapsules in a melamin coating. The microcapsule diameter in this embodiment is 45µm to 55µm.

Before the extrusion process, the polylactide PLA is dried at 60°C for 24h. Then, PLA and the microencapsulated ammonium polyphosphate are placed inside a mixer, heated up to 180°C and extruded, followed by extrusion into multi-well moulds, forming containers for candle products, 19 mm tall and with a diameter of 39 mm. In this embodiment, the container has a bottom and a cylindrical side wall. Once the containers are formed in the multi-well mould and cooled, the mould is open and the formed containers are removed and transferred to filling with a flammable material with an internal wick. In this embodiment, the container has a wall thickness of 1mm. In other embodiments, the container for a candle product may have different dimensions, shapes and wall thicknesses.

### Example II

In the second embodiment, the plastic according to the invention comprises a polymer with the same qualitative composition, but comprises a mixture of 80 wt.% of polylactide PLA and 20 wt.% of ammonium polyphosphate APP. In this embodiment, the polylactide PLA is a mixture of poly-L-lactide PLLA and poly-D-lactide PDLA isomers, wherein the mixture contains at least 95 wt.% of PLLA and not more than 5 wt.% of PDLA. On the other hand, ammonium polyphosphate APP in this embodiment has the form of microcapsules in a melamin coating. The microcapsule diameter in this embodiment is 25µm to 35µm. The process of container production is identical to that presented in Example I.

### Example III

In another embodiment, the material of the container contains 95.0 wt.% of polylactide PLA and 5.0 wt.% of ammonium polyphosphate APP microencapsulated in a melamin coating. The process of container production is described in Example I.

### Example IV

In another embodiment, the material used to extrude container for candle products contains 85 wt.% of polylactid PLA and 15 wt.% of ammonium polyphosphate APP. Polylactide PLA and ammonium polyphosphate may be present in quantities and forms described in the previous embodiment, but also in other example ratios and forms, not described above, but covered by the scope of protection applicable to the invention. The process of container production and ratios of other mixture ingredients are described in Example I.

### Example V

In this embodiment, the mixture of polylactide PLA isomers in the form of isomers - poly-L-lactide PLLA and poly-D-lactide PDLA, used to form a mixture with ammonium polyphosphate APP, contains 4 wt.% of poly-D-lactide PDLA and 96 wt.% of poly-L-lactide PLLA. Other materials and the container production technology are described in Example I.

### Example VI

In another embodiment, the mixture of polylactide PLA isomers in the form of isomers - poly-L-lactide PLLA and poly-D-lactide PDLA, used to form a mixture with ammonium polyphosphate APP, contains 7 wt.% of poly-D-lactide PDLA and 93 wt.% of poly-L-lactide PLLA. Further ingredients of the mixture used to extrude containers into the multi-well mould are described in Example I.

## Claims

1. Container for candle product intended to be filled with flammable material with a wick passing through the material, including a bottom and side walls, made of plastic, where the plastic is a polymer containing 40 to 99.99 wt.% of polylactide PLA and 0.01 to 60 wt.% of ammonium polyphosphate APP, wherein the polylactide PLA is a mixture of poly-L-lactide PLLA and poly-D-lactide PDLA isomers, wherein the mixture contains at least 80 wt.% of PLLA and not more than 20 wt.% of PDLA, **characterised in that** the mixture of polylactide PLA isomers in the form of poly-L-lactide PLLA and poly-D-lactide PDLA contains 4 wt.% to 7 wt.% of poly-D-lactide PDLA.

2. Container according to claim 1, **characterised in that** it contains 85 wt.% of polylactide PLA and 15 wt.% of ammonium polyphosphate APP.

3. Container according to claim 1 or 2, **characterised in that** ammonium polyphosphate APP has the form of microcapsules with diameter 25µm to 55µm.

4. Container according to claim 3, **characterised in that** microcapsules have a melamin coating.

5. Container according to claim 1 or 4, **characterised in that** it contains 98.4 wt.% of polylactide PLA and 1.6 wt.% of ammonium polyphosphate APP, microencapsulated inside a melamin coating.

## Patentansprüche

1. Behälter für Kerzenware, der dazu bestimmt ist, mit einem brennbaren Material gefüllt zu werden, in dessen Inneren ein Docht geführt wird, bestehend aus einem Boden und Seitenwänden, der aus Kunststoff hergestellt ist, wobei der Kunststoff ein Polymer ist, das von 40 bis 99,99 Gew.-% Polylactide PLA und von 0,01 bis 60 Gew.-% Ammoniumpolyphosphate APP enthält, und das Polylactide PLA ein Gemisch aus Poly-L-Lactid PLLA- und Poly-D-Lactid PDLA-Isomeren ist, wobei das Gemisch mindestens 80 Gew.-% PLLA und höchstens 20 Gew.-% PDLA enthält, **dadurch gekennzeichnet, dass** das Gemisch aus PLA-Polylactid-Isomeren in Form von Poly-L-L-Lactid PLLA und Poly-D-Lactid PDLA 4 bis 7 Gew.-% Poly-D-Lactid PDLA enthält.

2. Behälter nach Anspruch 1, **dadurch gekennzeichnet, dass** er 85 Gew.-% Polylactide PLA und 15 Gew.-% Ammoniumpolyphosphate APP enthält.

3. Behälter nach Anspruch 1 oder 2, **dadurch gekennzeichnet, dass** das Ammoniumpolyphosphate APP in Form von Mikrokapseln mit einer Größe von 25µm bis 55µm vorliegt.

4. Behälter nach Anspruch 3, **dadurch gekennzeichnet, dass** die Mikrokapseln eine Melaminhülle umfassen.

5. Behälter nach Anspruch 1 oder 4, **dadurch gekennzeichnet, dass** er 98,4 Gew.-% Polylactide PLA und 1,6 Gew.-% Ammoniumpolyphosphate APP mikroverkapselt in einer Melaminkapsel enthält.

## Revendications

1. Récipient pour le produit en forme de bougie, destiné à être rempli d'un matériau inflammable à l'intérieur dont la mèche est guidée, comprenant un fond et des parois latérales, fait en plastique où le plastique est un polymère contenant de 40% à 99,99% en poids de polylactide PLA et de 0,01% à 60% en poids de polyphosphate d'ammonium APP, et le polylactide PLA est un mélange d'isomères de poly-L-lactide PLLA et de poly-D-lactide PDLA, où le mélange contient au moins 80 % en poids de PLLA et au plus 20 % en poids de PDLA, **caractérisé en ce que** le mélange d'isomères de polylactide PLA sous forme de poly-L-lactide PLLA et de poly-D-lactide PDLA contient de 4% à 7% en poids de poly-D-lactide PDLA.

2. Récipient selon la revendication 1, **caractérisé en ce qu'**il contient 85% en poids de polylactide PLA et 15% en poids de polyphosphate d'ammonium APP.

3. Récipient selon la revendication 1 ou 2, **caractérisé en ce que** le polyphosphate d'ammonium APP est sous forme de microcapsules d'une taille allant de 25µm à 55µm.

4. Récipient selon la revendication 3, **caractérisé en ce que** les microcapsules contiennent un revêtement en mélamine.

5. Récipient selon la revendication 1 ou 4, , **caractérisé en ce qu'**il contient 98,4% en poids de polylactide PLA et 1,6% en poids de polyphosphate d'ammonium APP microencapsulé dans un revêtement en mélamine.
